(19) Europäisches Patentamt
European Patent Office
Office européen des brevets

(11) **EP 3 199 238 A1**

(12) **EUROPEAN PATENT APPLICATION**
published in accordance with Art. 153(4) EPC

(43) Date of publication:
02.08.2017 Bulletin 2017/31

(51) Int Cl.:
*B01J 35/02* (2006.01)    *E04C 2/02* (2006.01)

(21) Application number: 15843341.7

(22) Date of filing: 22.09.2015

(86) International application number:
PCT/KR2015/009955

(87) International publication number:
WO 2016/048009 (31.03.2016 Gazette 2016/13)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 24.09.2014 KR 20140127935

(71) Applicant: LG Hausys, Ltd.
Seoul 07326 (KR)

(72) Inventors:
• SEO, Joo-Hwan
Seoul 04740 (KR)

• LEE, Dong-Il
Anyang-si
Gyeonggi-do 13955 (KR)
• JANG, Hye-Youn
Ansan-si
Gyeonggi-do 15541 (KR)
• JUNG, Seong-Moon
Daejeon 34118 (KR)

(74) Representative: Wynne-Jones, Lainé and James
LLP
Essex Place
22 Rodney Road
Cheltenham
Gloucestershire GL50 1JJ (GB)

(54) **VISIBLE LIGHT ACTIVE PHOTOCATALYST TILE**

(57)    The present disclosure provides a visible light activated photocatalytic tile, comprising a porous ceramic tile; and a photocatalytic layer formed on one surface of the tile with a coating composition comprising an aqueous solvent and visible light activated photocatalytic particles.

EP 3 199 238 A1

**Description**

[Technical Field]

The present disclosure relates to a visible light activated photocatalytic tile.

[Background Art]

A photocatalyst that can comfortably provide IAQ (Indoor Air Quality) can be coated on a surface of an indoor interior material. Generally, a binder is used to coat and adhere the photocatalyst to a substrate. However, the binder covers the surface of the photocatalyst in the process of bonding with the photocatalyst, thereby reducing an exposed surface area of the photocatalyst. That is, when a binder is used for the photocatalytic coating, a surface reaction of the photocatalyst is reduced by the binder, thereby deteriorating the performance.

In addition, titanium dioxide ($TiO_2$) is used as a representative photocatalyst material, which is excellent in durability and abrasion resistance and is a safe non-toxic substance. However, since the band gap energy for activating titanium dioxide is large, it can absorb only light below ultraviolet wavelengths, and therefore, its application to indoor decorative materials other than exterior materials is limited.

Therefore, there is a need to develop an interior material that exhibits excellent photocatalytic performance based on its activity against visible lights when applied to indoors.

[Disclosure]

[Technical Problem]

It is an aspect of the present disclosure to provide a visible light activated photocatalytic tile excellent in adsorption and removal performance against indoor harmful organic substances and excellent in humidity control and antibacterial function based on the visible light activated performance.

[Technical Solution]

In accordance with one aspect of the present disclosure, a visible light activated photocatalytic tile may include a porous ceramic tile; and a photocatalytic layer formed on one surface of the tile with a coating composition comprising an aqueous solvent and visible light activated photocatalytic particles.

The porous ceramic tile may include pores having an average diameter of about 1 nm to about 10 $\mu$m.

The porous ceramic tile may have a pore volume of about 0.01 to about 0.2 cm$^3$/g.

The porous ceramic tile may include $\gamma$-alumina.

The $\gamma$-alumina may include a material in which at least one aluminum source has been phase changed, wherein the aluminum source is selected from the group consisting of aluminum nitride, aluminum carbonate, aluminum chloride, aluminum chloride dihydrate, aluminum hydroxide, aluminum chloride, aluminum nitride, alumina sol, and combinations thereof.

The porous ceramic tile may include about 20% to about 50% by weight of the $\gamma$-alumina.

The coating composition may include from about 90 to about 96% by weight of the aqueous solvent and from about 4 to about 10% by weight of the visible light activated photocatalytic particles.

The aqueous solvent may contain 100% by weight of water.

The visible light activated photocatalytic particles may include porous metal oxides; and metal particles supported on the porous metal oxides.

The porous metal oxides may include at least one selected from the group consisting of titanium oxide, tungsten oxide, zinc oxide, niobium oxide, and combinations thereof.

The metal particles may include at least one selected from the group consisting of tungsten, chromium, vanadium, molybdenum, copper, iron, cobalt, manganese, nickel, platinum, gold, silver, cerium, cadmium, zinc, magnesium, calcium, strontium, barium, and combinations thereof.

The visible light activated photocatalytic particles may include about 90% to about 99.9% by weight of the porous metal oxides and about 0.1% to about 10% by weight of the metal particles.

The visible light activated photocatalytic particles may have an average diameter of about 50 nm to about 500 nm.

The coating composition may be free of an alcoholic solvent and a binder.

[Advantageous Effects]

The visible light activated photocatalytic tile is excellent in air cleaning, deodorization and antibacterial functions based on its activity against visible lights, and can exhibit excellent photocatalytic efficiency over a long period of time when applied to indoors.

[Best Mode]

Hereinafter, the present disclosure will be described in detail by way of certain embodiments. However, it is to be understood that these embodiments are provided by way of illustrative purposes only, and the present disclosure is not limited thereto, but is only defined by the scope of the following claims and its equivalent.

One aspect of the present disclosure provides a visible light activated photocatalytic tile, which may include a porous ceramic tile; and a photocatalytic layer formed on one surface of the tile with a coating composition comprising an aqueous solvent and visible light activated photocatalytic particles.

Typically, coating compositions comprising photocatalytic particles are prepared using a binder to improve adhesion to a substrate, or using a solvent containing alcohol for rapid absorption and drying. However, such a binder and an alcoholic solvent may reduce an exposed surface area of the photocatalytic particles, thereby deteriorating the adsorption and removal performance of toxic substances, particularly toluene and the like having a large molecular weight and difficult to be decomposed or adsorbed.

As such, the coating composition for producing a photocatalytic layer is characterized by that it employs only an aqueous solvent without an alcoholic solvent or a binder, and thus contains the aqueous solvent and the visible light activated photocatalytic particles.

In addition, the tile may be a porous ceramic tile in order that the coating composition does not contain an alcoholic solvent or a binder but also has excellent adhesion and dispersibility to a surface of the tile.

Specifically, the coating composition may include about 90% to about 96% by weight of the aqueous solvent and about 4% to about 10% by weight of the visible light activated photocatalytic particles. The coating composition can be effectively dispersed and adhered to a surface of the porous ceramic tile by containing the aqueous solvent and the visible light activated photocatalytic particles in the above-mentioned range, and the visible light activated photocatalytic particles can exhibit excellent photocatalytic performance. When the aqueous solvent is contained in an amount of less than about 90% by weight and the visible light activated photocatalytic particles are contained in an amount exceeding about 10% by weight, there are problems that the coating composition may not be uniformly coated, adhesion to the tile may be reduced, and photocatalytic performance may be deteriorated. In addition, when the aqueous solvent is contained in an amount of more than about 96% by weight and the visible light activated photocatalytic particles are contained in an amount of less than about 4% by weight, problems may arise that the antibacterial function and the harmful substance removal function may not be exhibited, and many recovery processes are required to obtain the desired coating amount.

The aqueous solvent may be a solvent composed of 100% water. The water may include at least one selected from the group consisting of distilled water, ionized water, and combinations thereof, but is not limited thereto.

The coating composition contains visible light activated photocatalytic particles, which has photoactivity against visible lights, and can exhibit the removal performance against harmful substances by visible lights as well as ultraviolet lights. In addition, since the visible light activated photocatalytic particles exhibit excellent efficiency even in an indoor light source, the visible light activated photocatalytic tile may be applied to indoors so that a separate light supply device is not required.

For example, the visible light activated photocatalytic particles may have optical activity with respect to visible lights in a wavelength range of about 380 nm to about 780 nm, and specifically it can exhibit about 20% absorbance for a visible light having a wavelength of about 400 nm, and about 10% absorbance for a visible light having a wavelength of about 500 nm.

The visible light activated photocatalytic particles can generate peroxide anions or hydroxy radicals from electrons and holes generated from energy obtained by absorbing lights, wherein the anions and radicals can decompose and remove harmful substances so that it can perform air cleaning, deodorization, and antibacterial functions.

Specifically, the visible light activated photocatalytic particles may include porous metal oxides; and metal particles supported on the porous metal oxides.

The porous metal oxides are of porous particles, and may include at least one selected from the group consisting of titanium oxide, tungsten oxide, zinc oxide, niobium oxide, and combinations thereof.

Further, the metal particles are a metal that imparts optical activity to visible lights, and, for example, may include a transition metal or a noble metal. Specifically, the metal particles may include at least one selected from the group consisting of tungsten, chromium, vanadium, molybdenum, copper, iron, cobalt, manganese, nickel, platinum, gold, silver, cerium, cadmium, zinc, magnesium, calcium, strontium, barium, and combinations thereof.

For example, the visible light activated photocatalytic particles may include tungsten oxide, and platinum particles supported on tungsten oxide. In this case, the visible light activated photocatalytic particles can exhibit excellent optical activity against visible lights and can obtain excellent deodorizing and antibacterial functions even by an indoor light source.

The porous metal oxides comprises pores, wherein the pores may have a porosity ranging from about 5% to about 50%, and may have a specific surface area ranging from about 50 $m^2/g$ to about 500 $m^2/g$. When the porous metal oxides has the porosity and the specific surface area in the above range, the metal particles can be effectively supported thereon, thereby securing excellent optical activity against visible lights and further enhancing the adsorption and removal performance against harmful substances.

The visible light activated photocatalytic particles may include about 90% to about 99.9% by weight of the porous metal oxides, and may include about 0.1% to about 10% by weight of the metal particles. The metal particles can be supported on the surface of the porous metal oxides by a photo-deposition method. In this case, the contents of the porous metal oxides and the metal particles can be controlled within the above ranges to produce visible light activated photocatalytic particles exhibiting excellent catalytic effects.

For example, when the visible light activated photocatalytic particles include tungsten oxide and platinum particles supported on tungsten oxide, the tungsten oxide may be included in an amount of about 90% to about 99.9% by weight, and the platinum particles may be included in an amount of about 0.1 % to about 10% by weight.

When the porous metal oxides are included in an amount exceeding about 99.9% by weight and the metal particles are included in an amount of less than 0.1% by weight, the separation of electrons and holes may become difficult and sufficient photocatalytic activity may not be exhibited. In addition, when the porous metal oxides are included in an amount less than about 90% by weight and the metal particles are included in an amount greater than about 10% by weight, the number of electrons transferred from the porous metal oxides may not be sufficiently obtained and the photocatalytic activity may be lowered.

The visible light activated photocatalytic particles may have an average diameter of from about 50 nm to about 500 nm, and may be, for example, from about 50 nm to about 200 nm. The visible light activated photocatalytic particles can be dispersed in an aqueous solvent and can be applied to one surface of the porous ceramic tile. The visible light activated photocatalytic particles can be uniformly dispersed by having an average diameter within the above range, and can quickly penetrate the pores of the porous ceramic tile and exhibit excellent adhesion. In addition, since the visible light activated photocatalytic particles have an average diameter in the above range, an exposed area can be obtained and excellent air cleaning and antibacterial functions can be exhibited.

As described above, the coating composition for forming a photocatalytic layer does not contain an alcoholic solvent and a binder, and thus the exposed surface area of the visible light activated photocatalytic particles can be sufficiently secured to further improve the adsorption and removal performance against harmful substances such as volatile organic compounds (VOCs).

Particularly, the photocatalytic layer can be excellent in adsorption and removal ability to toluene. Toluene is a substance with a large molecular weight and a non-polarity, which is usually difficult to adsorb and decompose. Since the photocatalytic layer is substantially free of an alcoholic solvent and a binder but is formed from a coating composition containing an aqueous solvent and visible light activated photocatalytic particles, it is excellent in the adsorption and removal performance of the photocatalyst particles against harmful substances, and can exhibit a good removal rate against substances such as toluene which are difficult to adsorb and decompose.

The coating composition is applied to one surface of the porous ceramic tile without containing an alcoholic solvent or a binder, so that a photocatalytic layer having excellent adhesion and dispersibility can be formed.

The porous ceramic tile may have appropriate porosity to ensure adhesion and dispersibility of the coating composition. Specifically, the porous ceramic tile may include pores having an average diameter of about 1 nm to about 10 $\mu$m, and may include pores having an average diameter of, for example, about 10 nm to about 1 $\mu$m. As used herein, the term "pore" means a space that is formed between the particles forming the porous ceramic tile (also referred to as an open pore), and in which air can flow in and out easily. The average diameter of the pores refers to an arithmetic average of the pore diameters.

The average diameter of the pores within the above range allows to achieving the excellent adhesion and dispersibility of the coating composition, and at the same time, to secure an excellent humidity control effect and excellent strength by a humidify control function. When the pore size is less than about 1 nm, air cannot flow smoothly into and out of the interior, and a sufficient humidity control function may not be realized, and adhesion and dispersibility of the coating composition may not be ensured. Further, when the pore size exceeds about 10 $\mu$m, the strength of the visible light activated photocatalytic tile may be excessively reduced.

The porous ceramic tile may have a pore volume ranging from about 0.01 to about 0.2 $cm^3/g$. As used herein, the term "pore volume" indicates the volume of the pores included in the porous ceramic tile per unit mass of the tile. When the pore volume satisfies the above range, the excellent adhesion and dispersibility of the coating composition can be achieved. Further, at the same time, the lowering of the strength of the tile due to the lowering of the density can be prevented, thereby ensuring excellent durability and humidity control function.

The porous ceramic tile may include $\gamma$-alumina to impart a humidity control function. The $\gamma$-alumina can be transformed into another structure by heat treatment of an aluminum source. Further, the $\gamma$-alumina has a wide specific surface area and fine pore holes, and thus can exhibit excellent characteristics as a separator, a catalyst, a catalyst carrier, and an adsorbent.

The $\gamma$-alumina is formed on the pore surface including the particles forming the porous ceramic tile, and can have a good humidity and deodorizing function. Thus, when the humidity is high, the $\gamma$-alumina absorbs moisture through the pores to lower the humidity of indoors. On the contrary, when the humidity is low, the $\gamma$-alumina emits moisture stored in the pores to increase the humidity of indoors. The $\gamma$-alumina may be a commercially available $\gamma$-alumina, but in terms of cost reduction and efficiency, specifically, $\gamma$-alumina which has been phase changed by heat treatment at an inexpensive aluminum source can be used.

The $\gamma$-alumina may include a material in which at least one aluminum source selected from the group consisting of aluminum nitride, aluminum carbonate, aluminum chloride, aluminum chloride dihydrate, aluminum hydroxide, aluminum chloride, aluminum nitride, alumina sol, and combinations thereof is phase changed. However, the alumina source is not limited thereto, and any aluminum source that can be phase-changed into $\gamma$-alumina by heat treatment may be included therein.

For example, when aluminum hydroxide ($Al(OH)_3$) is phase-changed to $\gamma$-alumina ($Al_2O_3$), the conversion rate of aluminum hydroxide to $\gamma$-alumina may be from about 0.6 to about 0.7.

The $\gamma$-alumina may also have a specific surface area of about 150 $m^2/g$ to about 350 $m^2/g$. When the specific surface area of the $\gamma$-alumina is less than about 150 $m^2/g$, sufficient humidifying function cannot be exhibited, and when it exceeds about 350 $m^2/g$, the manufacturing process may become difficult and the manufacturing cost may increase.

The porous ceramic tile may include about 20% to about 50% by weight of the $\gamma$-alumina. The inclusion of the $\gamma$-alumina within the above-mentioned content enables the porous ceramic tile to secure proper pore characteristics and further improve the adhesion and dispersibility of the coating composition. Further, the porous ceramic tile can secure an excellent humidity control function and strength. When the amount of the $\gamma$-alumina is less than about 20% by weight, the moisture absorptive and desorptive properties may be deteriorated. When the amount exceeds about 50% by weight, the strength of the tile may be excessively decreased.

The visible light activated photocatalytic tile includes the porous ceramic tile and the photocatalytic layer formed from the coating composition on one surface thereof, thereby resulting in an air cleaning function, an antibacterial function, and a humidity control function. Further, it is possible to ensure appropriate strength and realize durability as an interior decorative material.

Specifically, the moisture absorptive and desorptive amount of the visible light activated photocatalytic tile may be about 60 $g/m^2$ to about 100 $g/m^2$. And the tile represents the moisture absorptive and desorptive amount in the above range, so that a pleasant indoor environment can be formed. Specifically, the visible light activated photocatalytic tile through the moisture absorptive and desorptive amount can form a moisture-resistant region having a temperature of about 25°C and a relative humidity of about 50% to about 75%, minimizing the discomfort index caused by moisture, and suppressing the generation of mold and bacteria.

Also, the visible light activated photocatalytic tile may have a flexural strength of about 10 MPa to 20 MPa. As used herein, the term "flexural strength" refers to a maximum tensile stress at the time of breaking in a flexural test, in which the maximum tensile stress indicates the point at which the visible light activated photocatalytic tile is destroyed when a flexural pressure is applied thereto. If the flexural strength satisfies the above range, the visible light activated photocatalytic tile can secure excellent strength and realize excellent durability as an interior decorative material.

Hereinafter, specific examples of the present disclosure will be described. However, it is to be understood that these examples described below are only intended to illustrate or describe the present disclosure in more detail, and thus the present disclosure is not limited thereto.

**Preparation Examples**

Preparation Example 1: Preparation of Porous Ceramic Tile

A composition containing aluminum hydroxide ($Al(OH)_3$) in an amount of 20% by weight based on solid content was prepared, pulverized through a ball mill, and the resulting slurry was homogeneously mixed through a spray drying process to obtain a granular powder containing 30% by weight of $\gamma$-alumina. Subsequently, the granular powder was dry-pressed to obtain a porous ceramic tile having a size of 150 mm x 150 mm x 7 mm (width x length x thickness) containing pores having an average particle diameter of 10 nm under a pore volume of 0.1 $cm^3/g$.

Preparation Example 2: Preparation of Visible Light Activated Catalytic Particles

After tungsten oxide ($WO_3$) powder was dispersed in water, 0.2 part by weight of chloroplatinic acid ($H_2PtCl_6$)

relative to 100 parts by weight of tungsten oxide ($WO_3$) was added to the solution to prepare Pt/$WO_3$ slurry. Platinum (Pt) particles were doped into the tungsten oxide ($WO_3$) particles by irradiating an UV under UV lamp (20W) for about 30 minutes while stirring the slurry. Then, a methanol solution corresponding to 10% by weight was added to the slurry containing the tungsten oxide ($WO_3$) particles doped with the platinum (Pt) particles, and the slurry was irradiated with an UV under UV lamp (20W) for about 30 minutes while stirring the slurry to produce visible light activated photocatalytic particles in which the platinum (Pt) particles were supported on the tungsten oxide ($WO_3$).

Examples and Comparative Examples

Example 1

A coating composition comprising 5% by weight of the visible light activated photocatalytic particles of Preparation Example 2 and 95% by weight of water was prepared. Then, the coating composition was applied to one surface of the porous ceramic tile of Preparation Example 1 and dried to form a photocatalytic layer, thereby producing a visible light activated photocatalytic tile.

Comparative Example 1

A visible light activated photocatalytic tile was produced in the same manner as in Example 1, except that the coating composition was applied to one surface of a tile having a pore volume of less than 0.01 $cm^3$/g and a size of 150 mm x 150 mm x 7 mm (width x length x thickness), instead of the porous ceramic tile of Preparation Example 1, thereby forming a photocatalytic layer.

Comparative Example 2

A visible light activated photocatalytic tile was produced in the same manner as in Example 1, except that a coating composition comprising 5% by weight of the visible light activated photocatalytic particles of Preparation Example 2, 90% by weight of isopropyl alcohol (IPA) and 5% by weight of $TiO_2$ sol-binder was prepared.

Comparative Example 3

A coating composition was prepared comprising 5% by weight of visible light activated photocatalytic particles of Preparation Example 2, 90% by weight of isopropyl alcohol (IPA) and 5% by weight of $TiO_2$ sol-binder. Then, this composition was applied on one surface of a tile having a pore volume of less than 0.01 $cm^3$/g and a size of 150 mm x 150 mm x 7 mm (width x length x thickness) and dried to prepare a photocatalytic layer, thereby producing a visible activated photocatalytic tile.

Evaluation

Experimental Example 1: Measurement of toluene removal rate

The visible light activated photocatalytic tiles of the above Examples and Comparative Examples were placed in a 20-L small chamber (commercially available from ADTEC), and air containing toluene at a concentration of 0.2 ppm was continuously supplied to the chamber at a flow rate of 167 cc/min, so that the number of ventilation was set to 0.13 times/hr. An LED 20W module was used as a light source. The toluene removal rate was calculated from the following equation 1 by measuring a concentration of toluene before entering the chamber (hereinafter referred to as a first concentration) and a concentration of toluene in the air after passing through the chamber (hereinafter referred to as a second concentration). The concentrations were quantified for 10 L volumes using a DNPH (2,4-dinitrophenylhydrazine) cartridge and analyzed via HPLC (commercially available from Agilent). The results are shown in Table 1 below.

Equation 1

Toluene removal rate (%) = {(first concentration - second concentration)/first concentration} X 100

Table 1

|  | Toluene removal rate [%] |
| --- | --- |
| Example 1 | 83 |
| C. Example 1 | Not attached - not measurable |
| C. Example 2 | 34 |
| C. Example 3 | 19 |

Referring to Table 1, Example 1 relates to a tile including a photocatalytic layer formed of a coating composition comprising an aqueous solvent and visible light activated photocatalytic particles, wherein the tile was remarkably superior in the toluene removal performance to that of Comparative Example 2 related to a coating composition using an alcoholic solvent and a binder in place of the aqueous solvent.

Further, the coating composition of Example 1 can be applied to one surface of the porous ceramic tile, thereby securing excellent adhesion and maximizing the photocatalytic performance. The coating composition does not adhere well to one surface of a tile having no pore characteristics as in Comparative Example 1 and was difficult to apply. As in Comparative Example 3, the coating composition using an alcoholic solvent and a binder exhibited significantly lower toluene removal performance than that of Example 1, although it adheres to a tile having no pore characteristics.

**Claims**

1.  A visible light activated photocatalytic tile, comprising:

    a porous ceramic tile; and
    a photocatalytic layer formed on one surface of the tile with a coating composition comprising an aqueous solvent and visible light activated photocatalytic particles.

2.  The visible light activated photocatalytic tile of claim 1, wherein the porous ceramic tile comprises pores having an average diameter of 1 nm to 10 $\mu$m.

3.  The visible light activated photocatalytic tile of claim 1, wherein the porous ceramic tile has a pore volume of 0.01 cm$^3$/g to 0.2 cm$^3$/g.

4.  The visible light activated photocatalytic tile of claim 1, wherein the porous ceramic tile comprises $\gamma$-alumina.

5.  The visible light activated photocatalytic tile of claim 4, wherein the $\gamma$-alumina comprises a material in which at least one aluminum source has been phase changed, wherein the aluminum source is selected from the group consisting of aluminum nitride, aluminum carbonate, aluminum chloride, aluminum chloride dihydrate, aluminum hydroxide, aluminum chloride, aluminum nitride, alumina sol, and combinations thereof.

6.  The visible light activated photocatalytic tile of claim 4, wherein the porous ceramic tile comprises 20% to 50% by weight of the $\gamma$-alumina.

7.   The visible light activated photocatalytic tile of claim 1, wherein the coating composition comprises from 90% to 96% by weight of the aqueous solvent and from 4% to 10% by weight of the visible light activated photocatalytic particles.

8.  The visible light activated photocatalytic tile of claim 1, wherein the aqueous solvent comprises 100% by weight of water.

9.  The visible light activated photocatalytic tile of claim 1, wherein the visible light activated photocatalytic particles comprises porous metal oxides; and metal particles supported on the porous metal oxides.

10. The visible light activated photocatalytic tile of claim 9, wherein the porous metal oxides comprises at least one selected from the group consisting of titanium oxide, tungsten oxide, zinc oxide, niobium oxide, and combinations thereof.

11. The visible light activated photocatalytic tile of claim 9, wherein the metal particles comprises at least one selected from the group consisting of tungsten, chromium, vanadium, molybdenum, copper, iron, cobalt, manganese, nickel, platinum, gold, silver, cerium, cadmium, zinc, magnesium, calcium, strontium, barium, and combinations thereof.

12. The visible light activated photocatalytic tile of claim 9, wherein the visible light activated photocatalytic particles comprises 90% to 99.9% by weight of the porous metal oxides and 0.1% to 10% by weight of the metal particles.

13. The visible light activated photocatalytic tile of claim 1, wherein the visible light activated photocatalytic particles have an average diameter of 50 nm to 500 nm.

14. The visible light activated photocatalytic tile of claim 1, wherein the coating composition is free of an alcoholic solvent and a binder.

## INTERNATIONAL SEARCH REPORT

| International application No. |
|---|
| **PCT/KR2015/009955** |

**A. CLASSIFICATION OF SUBJECT MATTER**

*B01J 35/02(2006.01)i, E04C 2/02(2006.01)i*

According to International Patent Classification (IPC) or to both national classification and IPC

**B. FIELDS SEARCHED**

Minimum documentation searched (classification system followed by classification symbols)
B01J 35/02; B01J 21/06; E04F 15/08; B01J 23/14; C04B 35/10; C04B 33/04; E04F 13/02; B01J 37/02; C04B 41/89; E04C 2/02

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: photocatalytic activity catalyst, nobinder, aqueous solvent, porous ceramic tile

**C. DOCUMENTS CONSIDERED TO BE RELEVANT**

| Category* | Citation of document, with indication, where appropriate, of the relevant passages | Relevant to claim No. |
|---|---|---|
| Y | JP 2012-107376 A (TOTO LTD.) 07 June 2012<br>See claim 1; and paragraphs [0006], [0014], [0017], [0024]. | 1-14 |
| Y | KR 10-0956843 B1 (LEE, Si Jin et al.) 11 May 2010<br>See claims 1, 3, 4, 6, 8; and paragraph [0088]. | 1-14 |
| Y | KR 10-2014-0055188 A (LG HAUSYS, LTD.) 09 May 2014<br>See claim 1; paragraph [0034]; and table 1. | 4-6 |
| A | JP 2006-077554 A (GREEN JAPAN KK.) 23 March 2006<br>See claims 1, 2, 4; paragraph [0030]; and figure 3. | 1-14 |
| A | JP 2002-293674 A (TOTO LTD.) 09 October 2002<br>See claims 1, 6 and 7. | 1-14 |
| A | JP 2004-224641 A (TOTO KOHAN CO., LTD. et al.) 12 August 2004<br>See claims 1 and 2. | 1-14 |
| A | KR 10-2013-0132051 A (LG HAUSYS, LTD.) 04 December 2013<br>See claims 1, 2, 6, 7 and 11. | 1-14 |

☐ Further documents are listed in the continuation of Box C. ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 14 JANUARY 2016 (14.01.2016) | **15 JANUARY 2016 (15.01.2016)** |

| Name and mailing address of the ISA/KR<br>Korean Intellectual Property Office<br>Government Complex-Daejeon, 189 Seonsa-ro, Daejeon 302-701, Republic of Korea<br>Facsimile No. 82-42-472-7140 | Authorized officer<br><br><br>Telephone No. |
|---|---|

Form PCT/ISA/210 (second sheet) (January 2015)

INTERNATIONAL SEARCH REPORT
Information on patent family members

International application No.

**PCT/KR2015/009955**

| Patent document cited in search report | Publication date | Patent family member | Publication date |
|---|---|---|---|
| JP 2012-107376 A | 07/06/2012 | JP 2012-107375 A<br>WO 2010-107086 A1 | 07/06/2012<br>23/09/2010 |
| KR 10-0956843 B1 | 11/05/2010 | KR 10-2010-0021160 A | 24/02/2010 |
| KR 10-2014-0055188 A | 09/05/2014 | CN 104781210 A<br>WO 2014-069802 A1 | 15/07/2015<br>08/05/2014 |
| JP 2006-077554 A | 23/03/2006 | CN 100749198 A | 22/03/2006 |
| JP 2002-293674 A | 09/10/2002 | NONE | |
| JP 2004-224641 A | 12/08/2004 | NONE | |
| KR 10-2013-0132051 A | 04/12/2013 | CN 104302398 A<br>JP 2015-522406 A<br>TW 201347848 A<br>TW I457177 B<br>US 2015-0099621 A1<br>WO 2013-176367 A1 | 21/01/2015<br>06/08/2015<br>01/12/2013<br>21/10/2014<br>09/04/2015<br>28/11/2013 |

Form PCT/ISA/210 (patent family annex) (January 2015)